(19) Europäisches Patentamt
European Patent Office
Office européen des brevets

(11) Veröffentlichungsnummer : **0 036 549**
**B1**

(12) # EUROPÄISCHE PATENTSCHRIFT

(45) Veröffentlichungstag der Patentschrift : **22.06.83**

(51) Int. Cl.³ : **C 08 F 10/00**, C 08 F 4/64

(21) Anmeldenummer : **81101737.5**

(22) Anmeldetag : **10.03.81**

(54) **Verfahren zum Herstellen von Homo- und Copolymerisaten von alpha-Monoolefinen.**

(30) Priorität : **24.03.80 DE 3011273**

(43) Veröffentlichungstag der Anmeldung : **30.09.81 Patentblatt 81/39**

(45) Bekanntmachung des Hinweises auf die Patenterteilung : **22.06.83 Patentblatt 83/25**

(84) Benannte Vertragsstaaten : **AT BE DE FR GB IT NL**

(56) Entgegenhaltungen :
**DE A 2 226 167**
**DE A 2 658 936**
**DE A 2 658 937**
**DE A 2 739 382**
**GB A 1 391 067**

(73) Patentinhaber : **BASF Aktiengesellschaft**
**Carl-Bosch-Strasse 38**
**D-6700 Ludwigshafen (DE)**

(72) Erfinder : **Staiger, Gerhard, Dr.**
**Virchowstrasse 26**
**D-6712 Bobenheim-Roxheim (DE)**

**EP 0 036 549 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Verfahren zum Herstellen von Homo- und Copolymerisaten von α-Monoolefinen

Die vorliegende Erfindung liegt im Rahmen eines Verfahrens zum Herstellen von Homo- und Copolymerisaten von $C_2$- bis $C_6$-α-Monoolefinen bei Temperaturen von 20 bis 160, insbesondere 50 bis 120 °C und Drücken von 1 bis 100, insbesondere 20 bis 70 bar mittels eines Ziegler-Natta-Katalysatorsystems aus

(1) einer Titan-III-Komponente, die erhalten wird indem man

(1.1) 1 Mol — gerechnet als Titan-III-Chlorid — eines für Ziegler-Natta-Katalysatorsysteme üblichen, mit einer eine Aluminiumchlorid-Gruppierung aufweisenden Verbindung sowie — gegebenenfalls — einem organischen Komplexbildner modifizierten Titan-III-chlorids mit

(1.2) 0,05 bis 5, insbesondere 0,1 bis 2,5 Mol eines — in Form einer 0,1 bis 10, insbesondere 0,5 bis 5 molaren Lösung in einem inerten Kohlenwasserstoff vorliegenden — Äthers der Formel

$$R^1—O—R^2,$$

worin $R^1$ und $R^2$ gleich oder verschieden sind und stehen für eine 2 bis 15, insbesondere 3 bis 10, Kohlenstoffatome aufweisende Alkylgruppe, eine Phenylgruppe oder eine Alkylphenylgruppe mit einer 1 bis 8 Kohlenstoffatome aufweisenden Alkylgruppe, bei einer Temperatur von 0 bis 120, insbesondere 20 bis 90 °C über eine Zeitspanne von 10 bis 120, insbesondere 20 bis 80 Minuten, sowie mit

(1.3) 0,1 bis 20, insbesondere 0,3 bis 12 Mol — in Form einer 0,1 bis 4, insbesondere 0,5 bis 3 molaren Lösung in einem inerten Kohlenwasserstoff vorliegendem — Titantetrachlorid bei einer Temperatur von 0 bis 120, insbesondere 20 bis 90 °C über eine Zeitspanne von 10 bis 220, insbesondere 20 bis 180 Minuten reagieren läßt und das Reaktionsprodukt isoliert, sowie

(2) einer Aluminiumalkyl-Komponente der Formel

$$R^3\text{-}\underset{\substack{|\\ Cl}}{Al}\text{-}R^4$$

worin $R^3$ und $R^4$ gleich oder verschieden sind und stehen für eine 1 bis 8, insbesondere 2 bis 4 Kohlenstoffatome aufweisende Alkylgruppe, mit der Maßgabe, daß das Atomverhältnis Titan aus der Titan-III-Komponente (1) : Aluminium aus der Aluminium-alkyl-Komponente (2) im Bereich von 1 : 1 bis 1 : 20, insbesondere 1 : 2 bis 1 : 15 liegt.

Verfahren dieser Art sind bekannt ; ihre Besonderheit gegenüber vergleichbaren anderen Verfahren liegt in der speziellen Ausgestaltung des Katalysatorsystems, wofür als typische Beispiele die aus den GB-PS 1 370 559, 1 391 067 und 1 391 068 bekannten Verfahren genannt werden können.

Die speziellen Ausgestaltungen des Katalysatorsystems werden vorgenommen, um bestimmte Ziele zu erreichen, z. B. die folgenden :

a) Katalysatorsysteme, die bei der Polymerisation von α-Monoolefinen, wie insbesondere Propylen, zu Polymerisaten mit einem hohen Anteil an stereoregulärem (= isotaktischem) Polymerisat führen.

b) Katalysatorsysteme, die eine erhöhte Ausbeute an Polymerisat zu liefern vermögen, nämlich Systeme mit einer erhöhten Produktivität, d. h. Systeme, bei denen die Menge an gebildetem Polymerisat pro Gewichtseinheit des Katalysatorsystems erhöht ist.

c) Katalysatorsysteme, durch die weniger Halogen in das Polymerisat eingebracht werden ; — was zu erreichen ist, indem die Ausbeute gemäß (b) gesteigert wird und/oder ein Titanhalogenid eingesetzt wird, das möglichst wenig Halogen erhält.

d) Katalysatorsysteme, deren Aktivitätsmaximum über eine möglichst lange Zeit konstant bzw. relativ konstant bleibt ; — was für Katalysatorausbeuten von erheblicher Bedeutung ist.

e) Katalysatorsysteme, die es erlauben, durch Erhöhung der Polymerisationstemperatur eine Umsatzsteigerung zu bewirken ohne signifikante Minderung der Stereoregularität der Polymerisate ; — ein Effekt, der generell erwünscht ist, insbesondere auch bei der Trokkenphasenpolymerisation.

f) Katalysatorsysteme, durch welche — insbesondere bei relativ hohen Polymerisationstemperaturen — die morphologischen Eigenschaften der Polymerisate in bestimmter Weise beeinflußt werden, etwa im Sinne einer einheitlichen Korngröße und/oder einer Verringerung der Feinstkornanteile und/oder eines hohen Schüttgewichtes ; — was z. B. für die technische Beherrschung der Polymerisationssysteme, die Aufarbeitung der Polymerisate und/oder die Verarbeitbarkeit der Polymerisate von Bedeutung sein kann.

g) Katalysatorsysteme, die einfach und sicher herzustellen und gut handzuhaben sind ; — z. B. solche, die sich in (inerten) Kohlenwasserstoff-Hilfsmedien zubereiten lassen.

h) Katalysatorsysteme, die es ermöglichen, bei der Polymerisation unter Einwirkung eines Molekulargewichtsreglers, wie insbesondere Wasserstoff, mit relativ geringen Mengen an Regler auszukommen ; — was z. B. für die Thermodynamik der Verfahrensführung von Bedeutung sein kann.

i) Katalysatorsysteme, die auf spezielle Polymerisationsverfahren zugeschnitten sind ; — etwa solche, die z. B. entweder auf die spezifischen Besonderheiten der Suspensionspolymerisation oder auf

die spezifischen Besonderheiten der Trockenphasenpolymerisation abgestimmt sind.

j) Katalysatorsysteme, die zu Polymerisaten führen, deren Eigenschaftsspektrum sie für das eine oder das andere Anwendungsgebiet besonders geeignet macht.

Nach den bisherigen Erfahrungen gibt es unter den mannigfachen Zielen etliche Ziele, die man durch spezielle Ausgestaltungen des Katalysatorsystems nur dann erreichen kann, wenn man andere Ziele zurücksetzt.

Unter diesen Gegebenheiten ist man im allgemeinen bestrebt, solche Ausgestaltungen zu finden, mit denen man nicht nur die gesteckten Ziele erreicht, sondern auch andere erwünschte Ziele möglichst wenig zurücksetzen muß.

In diesem Rahmen liegt die Aufgabenstellung der vorliegenden Erfindung : Eine neue Ausgestaltung eines Katalysatorsystems aufzuzeigen, mit der man gegenüber bekannten Ausgestaltungen bei relativ höheren Temperaturen — mit entsprechend relativ hohen Ausbeuten an Polymerisat — Polymerisate mit einer relativ höheren Stereoregularität (= Isotaktizität) erhalten kann.

Es wurde gefunden, daß die gestellte Aufgabe gelöst werden kann mit einem Katalysatorsystem der eingangs definierten Art, das als eine weitere Komponente (3) einen bestimmten phenolischen Stoff enthält.

Gegenstand der vorliegenden Erfindung ist mithin ein Verfahren zum Herstellen von Homo- und Copolymerisaten von $C_2$- bis $C_6$-$\alpha$-Monoolefinen bei Temperaturen von 20 bis 160, insbesondere 50 bis 120 °C und Drücken von 1 bis 100, insbesondere 20 bis 70 bar mittels eines Ziegler-Natta-Katalysatorsystems aus

(1) einer Titan-III-Komponente, die erhalten wird, indem man

(1.1) 1 Mol — gerechnet als Titan-III-chlorid — eines für Ziegler-Natta-Katalysatorsysteme üblichen, mit einer eine Aluminiumchlorid-Gruppierung aufweisenden Verbindung sowie — gegebenenfalls — einem organischen Komplexbildner modifizierten Titan-III-chlorids mit

(1.2) 0,05 bis 5, insbesondere 0,1 bis 2,5 Mol eines — in Form einer 0,1 bis 10, insbesondere 0,5 bis 5 molaren Lösung in einem inerten Kohlenwasserstoff vorliegenden — Äthers der Formel

$$R^1—O—R^2,$$

worin $R^1$ und $R^2$ gleich oder verschieden sind und stehen für eine 2 bis 15, insbesondere 3 bis 10, Kohlenstoffatome aufweisende Alkylgruppe, eine Phenylgruppe oder eine Alkylphenylgruppe mit einer 1 bis 8 Kohlenstoffatome aufweisenden Alkylgruppe, bei einer Temperatur von 0 bis 120, insbesondere 20 bis 90 °C über eine Zeitspanne von 10 bis 120, insbesondere 20 bis 80 Minuten, sowie mit

(1.3) 0,1 bis 20, insbesondere 0,3 bis 12 Mol — in Form einer 0,1 bis 4, insbesondere 0,5 bis 3 molaren Lösung in einem inerten Kohlenwasserstoff vorliegenden — Titantetrachlorid bei einer Temperatur von 0 bis 120, insbesondere 20 bis 90 °C über eine Zeitspanne von 10 bis 220, insbesondere 20 bis 180 Minuten reagieren läßt und das Reaktionsprodukt isoliert, sowie

(2) einer Aluminiumalkyl-Komponente der Formel

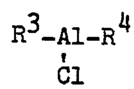

worin $R^3$ und $R^4$ gleich oder verschieden sind und stehen für eine 1 bis 8, insbesondere 2 bis 4 Kohlenstoffatome aufweisende Alkylgruppe, mit der Maßgabe, daß das Atomverhältnis Titan aus der Titan-III-Komponente (1) : Aluminium aus der Aluminium-alkyl-Komponente (2) im Bereich von 1 : 1 bis 1 : 20, insbesondere 1 : 2 bis 1 : 15 liegt.

Das erfindungsgemäße Verfahren ist dadurch gekennzeichnet, daß man ein Katalysatorsystem einsetzt, das als eine weitere Komponente

(3) einen phenolischen Stoff der Formel

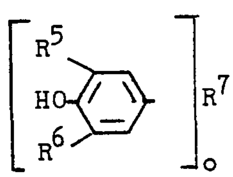 oder (I)

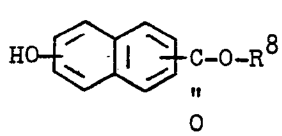 (II)

enthält, worin stehen

$R^5$ für eine $C_1$- bis $C_6$-, insbesondere $C_3$- bis $C_4$-Alkylgruppe,

$R^6$ für Wasserstoff oder eine $C_1$- bis $C_6$-, insbesondere $C_3$- bis $C_4$-Alkylgruppe,

$R^7$ für Wasserstoff oder einen nicht mehr als 30, insbesondere nicht mehr als 24 Kohlenstoffatome sowie — gegebenenfalls — bis zu insgesamt 6, insbesondere bis zu insgesamt 4 Äthergruppen und/oder Estergruppen aufweisenden gesättigten Kohlenwasserstoffrest,

$R^8$ für eine $C_2$- bis $C_{24}$-, insbesondere $C_4$- bis $C_{18}$-Alkylgruppe, und

o für eine ganze Zahl von 1 bis 6, insbesondere 1 bis 4, mit der Maßgabe, daß das Molverhältnis Aluminiumalkyl-Komponente (2) : phenolischer Stoff (3) 1 : 1 bis 40 : 1, insbesondere 3 : 1 bis 25 : 1 beträgt.

Zu dem erfindungsgemäßen Verfahren ist im einzelnen das folgende zu bemerken :

Das Polymerisationsverfahren als solches kann — unter Beachtung der kennzeichnenden Besonderheit — in praktisch allen einschlägig üblichen technologischen Ausgestaltungen durchgeführt werden, etwa als diskontinuierliches, taktweises oder kontinuierliches Verfahren, sei es z. B. als Suspensions-Polymerisationsverfahren, oder Trockenphasen-Polymerisationsverfahren. Die erwähnten technologischen Ausgestaltungen — mit anderen Worten : die technologischen Varianten der Polymerisation von α-Monoolefinen nach Ziegler-Natta — sind aus der Literatur und Praxis wohlbekannt, so daß sich nähere Ausführungen zu ihnen erübrigen.

Der Vollständigkeit halber ist zu erwähnen, daß sich beim erfindungsgemäßen Verfahren auch die Molekulargewichte der Polymerisate durch die einschlägig üblichen Maßnahmen regeln lassen, z. B. mittels Reglern, wie insbesondere Wasserstoff.

Des weiteren ist noch festzuhalten, daß beim erfindungsgemäßen Verfahren die Komponenten des Katalysatorsystems in mannigfacher Weise in den Polymerisationsraum eingebracht werden können, z. B. (i) die Titan-Komponente (1), die Aluminiumalkyl-Komponente (2) sowie der phenolische Stoff (3) alle örtlich gemeinsam, (ii) die gleichen drei Komponenten alle örtlich getrennt voneinander, (iii) die Komponente (1) einerseits und ein Gemisch aus den Komponenten (2) und (3) andererseits örtlich getrennt voneinander — was insbesondere beim Trockenphasen-Polymerisationsverfahren von Vorteil sein kann —, oder (iiii) ein Gemisch aus den Komponenten (1) und (3) einerseits und die Komponente (2) andererseits örtlich getrennt voneinander.

Schließlich ist darauf hinzuweisen, daß die vorteilhaften Eigenschaften des erfindungsgemäßen Verfahrens im allgemeinen besonders dann in Erscheinung treten, wenn es als Trockenphasen-Polymerisationsverfahren durchgeführt wird (für dessen Ausgestaltungen typische Beispiele etwa mit den DE-AS 12 17 071, 15 20 307 und 15 20 373 gegeben sind).

Was die stoffliche Seite des neuen Katalysatorsystems betrifft, ist im einzelnen das folgende zu sagen :

(1) Die einzusetzende Titan-III-Komponente als solche ist entwender bekannt oder aus einschlägig bekannten Ausgangsstoffen ohne weiteres erhältlich.

(1.1) Das als Ausgangsstoff für die Titan-III-Komponente (1) dienende, mit einer eine Aluminiumchlorid-Gruppierung — d. h. eine Gruppierung der Formel —AlCl— — aufweisenden Verbindung sowie — gegebenenfalls — einem organischen Komplexbildner modifizierten Titan-III-chlorid ist ein für Ziegler-Natta-Katalysatorsysteme übliches. Damit wird es im allgemeinen einer der folgenden Kategorien angehören :

a) Titantrichlorid-Cokristallisate mit Aluminiumchlorid, etwa der Formel $TiCl_3 \cdot 1/3\ AlCl_3$. Siehe hierzu die US-PS 3 128 252 und 3 814 743.

Wie sich gezeigt hat, ist aus dieser Gruppe für den erfindungsgemäßen Zweck besonders gut geeignet ein sehr feinteiliges Cokristallisat der Formel $TiCl_3 \cdot 1/3\ AlCl_3$.

b) Mit Elektronendonatoren bzw. Lewis-Basen — als organische Komplexbildner — modifizierte Titantrichlorid-Cokristallisate der unter a) bezeichneten Art. Solche modifizierten Cokristallisate gibt es in besonders großer Vielfalt, da sie bekanntlich eine Reihe von Vorteilen mit sich bringen. Um unnötige Wiederholungen zu vermeiden sei im gegebenen Zusammenhang schlaglichtartig beispielsweise verwiesen auf die GB-PS 851 113 und die FR-PS 1 231 089 sowie im einzelnen auf die DE-OS 22 26 167, 23 01 136, 24 00 190, 24 41 541, 25 19 582, 26 58 936, 26 58 937, 26 58 939 und 27 39 382.

Für den erfindungsgemäßen Zweck kommen aus diesen Gruppen vor allem in Betracht sehr feinteilige Cokristallisate der Formel $TiCl_3 \cdot 1/3\ AlCl_3$, welche mit den folgenden Donatoren bzw. Basen modifiziert sind : Äthern, wie dem Diisoamyläther, dem Di-n-butyläther und dem Di-n-propyläther ; Estern, wie dem Benzoesäureisoamylester und dem Phenylessigsäureäthylester ; Phosphinen, wie dem Tributylphosphin ; Phosphinoxiden, wie dem Tributylphosphinoxid ; sowie Säureamiden, wie dem Hexamethylphosphorsäuretriamid. Hierbei ist es im allgemeinen günstig, wenn das Molverhältnis Cokristallisat : Donator bzw. Base etwa 1 : 12 bis 1 : 2 beträgt.

c) Modifizierte Titan-III-chloride wie sie entstehen wenn Titan-IV-chlorid mittels aluminiumorganischer Verbindungen, wie insbesondere Trialkylaluminium oder Dialkylaluminiumchlorid, um eine Wertigkeitsstufe reduziert wird. Repräsentative Beispiele hierfür finden sich in den eingangs bereits zitierten GB-PS 1 391 067 und 1 391 068.

(1.2) Der ebenfalls als Ausgangsstoff für die Titan-III-Komponente (1) dienende — in Form einer Lösung in einem inerten Kohlenwasserstoff vorliegendende — Äther kann wiederum ein einschlägig üblicher, der angegebenen Formel entsprechender sein, insbesondere ein solcher, in dessen Formel $R^1$

bzw. $R^2$ stehen für eine Methyl-, Äthyl-, Propyl-, Butyl-, Amyl-, Hexyl- oder Phenylgruppe. Geeignete Äther dieser Art sind beispielsweise beschrieben in der US-Patentschrift 3 116 274.

Namentliche Beispiele für gut geeignete Äther sind der Di-n-propyl-, Di-n-butyl-, Di-n-amyl-, Di-isoamyl- und Di-n-hexyläther sowie der Methyl- und Äthylphenyläther. Besonders gut geeignete Äther sind der Di-n-butyl-, Di-isoamyl- und Methylphenyläther.

(1.3) Das weiterhin als Ausgangsstoff für die Titan-III-Komponente (1) dienende — in Form einer Lösung in einem inerten Kohlenwasserstoff vorliegende — Titantetrachlorid ist ebenfalls eine einschlägig übliche Verbindung.

Das Titantetrachlorid (1.3) liegt — ebenso wie der Äther (1.2) — in Form einer Lösung vor, wobei der jeweils als Lösungsmittel dienende Kohlenwasserstoff ein für Ziegler-Natta-Katalysatorsysteme üblicher sein kann, also z. B. ein Alkan wie Pentan, Hexan, Heptan oder Benzin.

Das Herstellen der Titan-III-Komponente (1) aus ihren Ausgangsstoffen ist ohne Schwierigkeiten auf üblichem Wege möglich. Um unnötige Wiederholungen zu vermeiden sei — beispielsweise — auf die Arbeitsmethoden aus den eingangs bereits zitierten GB-PS 1 370 559, 1 391 067 und 1 391 068 verwiesen.

(2) Als Aluminiumalkyl-Komponente mit der angegebenen Formel kommen ebenfalls die einschlägig üblichen, dieser Formel gehorchenden in Betracht ; sie sind aus Literatur und Praxis so wohlbekannt, daß auf sie nicht näher eingegangen zu werden braucht. Als herausragender Vertreter sei beispielsweise genannt das Diäthylaluminiumchlorid.

Zu den kennzeichnenden phenolischen Stoffen (3) ist zu sagen :

Typische Beispiele für gut geeignete Stoffe mit der angegebenen Formel (I) sind solche, in denen der Rest $R^5$ eine tert.-Butylgruppe, der Rest $R^6$ Wasserstoff oder eine tert.-Butylgruppe, der Rest $R^7$ Wasserstoff oder eine niedere Alkylgruppe, wie die Methyl-, Äthyl-, n-Propyl-, i-Propyl-, n-Butyl-, i-Butyl- oder tert.-Butylgruppe sind und o = 1 ist. Hervorzuheben sind auch Stoffe, in denen die Reste $R^5$ und $R^6$ die gleichen Reste wie vorstehend sind und deren Rest $R^7$ sich symbolisieren läßt durch die Formeln

$$-C_pH_{2p}-\underset{\underset{O}{\|}}{C}-O-C_qH_{2q+1} \qquad \text{(mit o = 1)}$$

oder

$$(-C_pH_{2p}-\underset{\underset{O}{\|}}{C}-O-CH_2-)_4C \qquad \text{(mit o = 4)}$$

worin stehen

p für eine ganze Zahl von 0 bis 5, insbesondere 1 bis 4, und

q für eine ganze Zahl von 1 bis 24, insbesondere 1 bis 18, und wobei die Gruppierungen $—C_pH_{2p}—$ sowie $—C_qH_{2q+1}$ vorzugsweise geradkettig sind.

Namentliche Beispiele für gut geeignete Stoffe mit der angegebenen Formel (I) sind 1-Oxy-2,6-di-tert.-butylbenzol, 4-Oxy-3,5-di-tert.-butyltoluol, der Ester der β-(4'-Oxy-3',5'-di-tert.-butylphenyl)-propionsäure mit Methanol, Äthanol, n-Propanol, n-Butanol, n-Octanol, n-Dodecanol bzw. n-Octadecanol und der Tetra-ester der vorgenannten Säure mit Pentaerythrit sowie ferner 1,3,5-Trimethyl-2,4,6-tris-(3,5-di-tert.-butyl-4-hydroxy-benzyl)-benzol.

Typische Beispiele für gut geeignete Stoffe mit der angegebenen Formel (II) sind solche, die sich ableiten im Säureteil von der 2-Oxy-4-naphthoe-, 1-Oxy-2-naphthoe-, 2-Oxy-1-naphthoe- oder 1-Oxy-8-naphthoesäure und im Alkoholteil vom n-Octanol, n-Dodecanol oder n-Octadecanol.

Namentliche Beispiele für gut geeignete Stoffe mit der angegebenen Formel (II) sind der 2-Oxy-4-naphthoesäure-n-octadecylester, 1-Oxy-8-naphthoesäure-n-dodecylester, 1-oxy-8-naphthoesäure-n-octadecylester, 1-Oxy-2-naphthoesäure-n-octylester und der 2-Oxy-1-naphthoesäure-n-octadecylester.

Das erfindungsgemäße Verfahren erlaubt es, Homo- und Copolymerisate von $C_2$- bis $C_6$-α-Monoolefinen in vorteilhafter Weise herzustellen, wobei besonders geeignete zu polymerisierende α-Monoolefine Propylen, Buten-1 und 4-Methylpenten-1, sowie — zur Copolymerisation — Äthylen sind.

## Beispiel 1

Ausgangsstoffe des Katalysatorsystems sind

(1) Eine Titan-III-Komponente, die erhalten wird indem man

(1.1) 1 Mol — gerechnet als Titan-III-chlorid — eines mit einer eine Aluminiumchlorid-Gruppierung aufweisenden Verbindung modifizierten Titan-III-chlorids wie es gemäß der GB-PS 1 391 067, Beispiel 1, Abschnitt A erhältlich ist, mit

(1.2) 0,67 Mol — in Form einer 1-molaren Lösung in n-Hexan vorliegendem — Diisoamyl-äther bei einer Temperatur von 60 °C über eine Zeitspanne von 60 Minuten, sowie mit

(1.3) 1,3 Mol — in Form einer 2-molaren Lösung in n-Heptan vorliegendem — Titantetrachlorid bei einer Temperatur von 75 °C über eine Zeitspanne von 120 Minuten reagieren läßt und das Reaktionsprodukt isoliert, mit der Maßgabe, daß man dabei im einzelnen sinngemäß verfährt nach der GB-PS 1 391 067, Beispiel 1, Abschnitte B und C.

(2) Diäthylaluminiumchlorid.

(3) der in der unten stehenden Tabelle angegebene phenolische Stoff.

Zur Polymerisation werden unter Ausschluß von Luft und Feuchtigkeit in einem Rührgefäß 1 000 Gewichtsteile n-Heptan vorgelegt, worauf man 2,4 Gewichtsteile der Katalysatorkomponente (2) zugibt sowie soviel der Komponente (1), daß das Atomverhältnis Titan aus der Titan-III-Komponente (1) : Aluminium aus der Aluminiumalkyl-Komponente (2) 1 : 2,5 beträgt und soviel der Katalysatorkomponente (3), daß das Molverhältnis Aluminiumalkyl-Komponente (2) : phenolischem Stoff (3) den in der Tabelle angegebenen Wert hat.

Die eigentliche Polymerisation wird mit Propylen bei einer Temperatur von 60 °C unter einem Druck des Monomeren von 1 bar über 3 Stunden unter Rühren durchgeführt, worauf das gebildete Polypropylen in üblicher Weise isoliert wird ; seine Menge und sein in siedendem n-Heptan unlöslicher Anteil sind in der Tabelle angegeben.

## Beispiel 2

Ausgangsstoffe des Katalysatorsystems sind :

(1) Eine Titan-III-Komponente, die erhalten wird indem man

(1.1) 1 Mol eines für Ziegler-Natta-Katalysatorsysteme üblichen Titantrichlorid-Cokristallisats der Formel $TiCl_3 \cdot 1/3\ AlCl_3$ mit

(1.2) 2,5 Mol — in Form einer 3-molaren Lösung in n-Hexan vorliegendem — Diisoamyl-äther bei einer Temperatur von 60 °C über eine Zeitspanne von 60 Minuten, sowie mit

(1.3) 11 Mol — in Form einer 2-molaren Lösung in n-Hexan vorliegendem — Titantetrachlorid bei einer Temperatur von 65 °C über eine Zeitspanne von 120 Minuten reagieren läßt und das Reaktionsprodukt isoliert, mit der Maßgabe, daß man dabei im einzelnen sinngemäß verfährt nach der GB-PS 1 370 559, Beispiel 1, Abschnitte A und B.

(2) Diäthylaluminiumchlorid.

(3) Der in der unten stehenden Tabelle angegebene phenolische Stoff.

Die Polymerisation erfolgt in Analogie zu Beispiel 1.

Daten zum dabei erhaltenen Polypropylen finden sich in der Tabelle.

## Beispiel 3

Ausgangsstoffe des Katalysatorsystems sind :

(1) Eine Titan-III-Komponente, die erhalten wird, indem man

(1.1) 1 Mol — gerechnet als Titan-III-chlorid — eines für Ziegler-Natta-Katalysatorsysteme üblichen Vermahlungsprodukts aus einem Titantrichlorid-Cokristallisat der Formel $TiCl_3 \cdot 1/3\ AlCl_3$ mit Tri-n-butylphosphin, wie es gemäß der DE-OS 22 26 167, Beispiel 2, erhältlich ist mit

(1.2) + (1.3) 0,67 Mol Diisoamyläther sowie 0,33 Mol Titantetrachlorid — in Form einer gemeinsamen 1-molaren Lösung des Äthers sowie einer 0,5-molaren Lösung des Tetrachlorids in n-Heptan vorliegend — bei einer Temperatur von 70 °C über eine Zeitspanne von 120 Minuten reagieren läßt und das Reaktionsprodukt isoliert, mit der Maßgabe, daß man dabei im einzelnen sinngemäß verfährt nach der GB-PS 1 391 067, Beispiel 10.

(2) Diäthylaluminiumchlorid.

(3) Der in der unten stehenden Tabelle angegebene phenolische Stoff.

Die Polymerisation erfolgt ebenfalls in Analogie zu Beipiel 1.

Daten zum dabei erhaltenen Polypropylen finden sich wiederum in der Tabelle.

## Vergleichsversuche

Die Beispiele 1 (≙ Vergleichsversuch A), 2 (≙ Vergleichsversuch B) sowie 3 (≙ Vergleichsversuch C) werden wiederholt, mit der jeweils einzigen Ausnahme, daß ohne Zusatz des phenolischen Stoffes (3) gearbeitet wird. Die Daten zu den dabei erhaltenen Polypropylenen sind ebenfalls in die Tabelle aufgenommen.

In der Tabelle bedeuten :

ODBP = n-Octadecyl-β-(4′-oxy-3′,5′-di-tert.-butylphenyl)-propionat

TEOP = Tetra-ester der β-(4′-Oxy-3′,5′-di-tert.-butylphenyl)-propionsäure mit Pentaerythrit

MDBP = Methyl-β-(4′-oxy-3′,5′-di-tert.-butylphenyl)-propionat

(Siehe die Tabelle Seite 7)

Tabelle

| Beispiel bzw. Vgl.-vers. | phenolischer Stoff Art | Molverhältnis (2) : (3) | Polypropylen Gew.teile | $n\text{-}C_7H_{16}$ unlösl. |
|---|---|---|---|---|
| 1 | ODBP | 10 : 1 | 285 | 99,1 % |
| 2 | TEOP | 10 : 1 | 251 | 98,4 % |
| 3 | MDBP | 10 : 1 | 275 | 98,6 % |
| A | - | - | 269 | 98,6 % |
| B | - | - | 225 | 97,6 % |
| C | - | - | 257 | 98,1 % |

**Anspruch**

Verfahren zum Herstellen von Homo- und Copolymerisaten von $C_2$- bis $C_6$-α-Monoolefinen bei Temperaturen von 20 bis 160 °C und Drücken von 1 bis 100 bar mittels eines Ziegler-Natta-Katalysatorsystems aus

(1) einer Titan-III-Komponente, die erhalten wird, indem man

(1.1) 1 Mol — gerechnet als Titan-III-chlorid-eines für Ziegler-Natta-Katalysatorsysteme üblichen, mit einer eine Aluminiumchlorid-Gruppierung aufweisenden Verbindung sowie — gegebenenfalls — einem organischen Komplexbildner modifizierten Titan-III-chlorids mit

(1.2) 0,05 bis 5 Mol eines — in Form einer 0,1 bis 10 molaren Lösung in einem inerten Kohlenwasserstoff vorliegenden — Äthers der Formel

$$R^1—O—R^2,$$

worin $R^1$ und $R^2$ gleich oder verschieden sind und stehen für eine 2 bis 15 Kohlenstoffatome aufweisende Alkylgruppe, eine Phenylgruppe oder eine Alkylphenylgruppe mit einer 1 bis 8 Kohlenstoffatome aufweisenden Alkylgruppe, bei einer Temperatur von 0 bis 120 °C über eine Zeitspane von 10 bis 120 Minuten, sowie mit

(1.3) 0,1 bis 20 Mol — in Form einer 0,1 bis 4 molaren Lösung in einem inerten Kohlenwasserstoff vorliegendem — Titantetrachlorid bei einer Temperatur von 0 bis 120 °C über eine Zeitspanne von 10 bis 220 Minuten reagieren läßt und das Reaktionsprodukt isoliert, sowie

(2) einer Aluminiumalkyl-Komponente der Formel

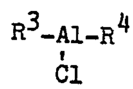

worin $R^3$ und $R^4$ gleich oder verschieden sind und stehen für eine 1 bis 8 Kohlenstoffatome aufweisende Alkylgruppe, mit der Maßgabe, daß das Atomverhältnis Titan aus der Titan-III-Komponente (1) : Aluminium aus der Aluminium-alkyl-Komponente (2) im Bereich von 1 : 1 bis 1 : 20 liegt, dadurch gekennzeichnet, daß man ein Katalysatorsystem einsetzt, das als eine weitere Komponente

(3) einen phenolischen Stoff der Formel

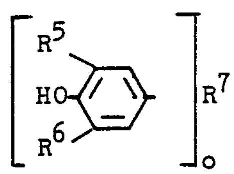 oder (I)

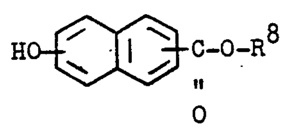 (II)

enthält, worin stehen

$R^5$ für eine $C_1$-bis $C_6$-Alkylgruppe,

$R^6$ für Wasserstoff oder eine $C_1$- bis $C_6$-Alkylgruppe,

$R^7$ für Wasserstoff oder einen nicht mehr als 30 Kohlenstoffatome sowie — gegebenenfalls — bis zu insgesamt 6 Äthergruppen und/oder Estergruppen aufweisenden gesättigten Kohlenwasserstoffrest,

$R^8$ für eine $C_2$- bis $C_{24}$-Alkylgruppe, und

o für eine ganze Zahl von 1 bis 6, mit der Maßgabe, daß das Molverhältnis Aluminiumalkyl-Komponente (2) : phenolischer Stoff (3) 1 : 1 bis 40 : 1 beträgt.

**Claim**

A process for the preparation of homopolymers and copolymers of $C_2$-$C_6$-α-monoolefins at from 20 to 160 °C, and under a pressure of from 1 to 100 bar, by means of a Ziegler-Natta catalyst system comprising

(1) a titanium-III component which is obtained by reacting

(1.1) 1 mole, calculated as titanium-III chloride, of a titanium-III chloride conventionally used for Ziegler-Natta catalyst systems, which has been modified with a compound possessing an aluminium chloride group and may or may not have been modified with an organic complexing agent, with

(1.2) from 0.05 to 5 moles of an ether of the formula

$$R^1—O—R^2$$

where $R^1$ and $R^2$ are identical or different and each is alkyl of 2 to 15 carbon atoms, phenyl or alkylphenyl, where alkyl is of 1 to 8 carbon atoms, the ether being in the form of an 0.1 — 10 molar solution in an inert hydrocarbon, at from 0 to 120 °C for a period of from 10 to 120 minutes, and with

(1.3) from 0.1 to 20 moles of titanium tetrachloride, in the form of an 0.1 — 4 molar solution in an inert hydrocarbon, at from 0 to 120 °C for a period of from 10 to 220 minutes, and isolating the reaction product, and

(2) an aluminium-alkyl component of the formula

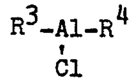

where $R^3$ and $R^4$ are identical or different and each is alkyl of 1 to 8 carbon atoms, with the proviso that the atomic ratio of titanium from the titanium-III component (1) to aluminium from the aluminium-alkyl component (2) is from 1 : 1 to 1 : 20, in which process the catalyst system employed contains, as a further component,

(3) a phenolic compound of the formula

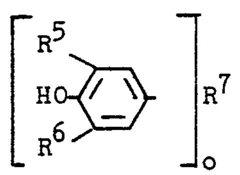 or (I)

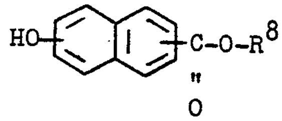 (II)

where

$R^5$ is $C_1$-$C_6$-alkyl,

$R^6$ is hydrogen or $C_1$-$C_6$-alkyl,

$R^7$ is hydrogen or a saturated hydrocarbon radical of not more than 30 carbon atoms, which may or may not contain up to a total of 6 ether groups and/or ester groups,

$R^8$ is $C_2$-$C_{24}$-alkyl, and

o is an integer from 1 to 6, with the proviso that the molar ratio of aluminium-alkyl component (2) to phenolic compound (3) is from 1 : 1 to 40 : 1.

**Revendication**

Procédé pour la préparation de produits d'homo- et de copolymérisation d'α-mono-oléfines en $C_2$ à

$C_6$, à des températures de 20 à 160 °C et sous des pressions de 1 à 100 bars, au moyen d'un système catalyseur de Ziegler-Nattà se composant

(1) d'un constituant titaneux que l'on obtient en faisant réagir

(1.1) 1 mol (calculée en tant que chlorure titaneux) d'un chlorure titaneux modifié par un composé comportant un groupement chlorure d'aluminium et — le cas échéant — par un agent complexant organique, tel qu'utilisé classiquement pour des systèmes catalyseurs de Ziegler-Natta, avec

(1.2) 0,05 à 5 mol d'un éther — se présentant sous la forme d'une solution 0,1- à 10-molaire dans un hydrocarbure inerte — de formule

$$R^1—O—R^2$$

dans laquelle $R^1$ et $R^2$ sont semblables ou différents et sont mis chacun pour un groupe alcoyle comportant 2 à 15 atomes de carbone, un groupe phényle ou un groupe alcoylphényle dont le groupe alcoyle comporte 1 à 8 atomes de carbone, à une température de 0 à 120 °C, pendant un laps de temps de 10 à 120 minutes, et avec

(1.3) 0,1 à 20 mol de tétrachlorure de titane — se présentant sous la forme d'une solution 0,1- à 4-molaire dans un hydrocarbure inerte — à une température de 0 à 120 °C, pendant un laps de temps de 10 à 220 minutes,

et en isolant le produit de la réaction, ainsi que

(2) d'un constituant aluminium-alcoyle de formule

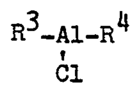

dans laquelle $R^3$ et $R^4$ sont semblables ou différents et sont mis chacun pour un groupe alcoyle comportant 1 à 8 atomes de carbone, avec cette condition que le rapport atomique du titane du constituant titaneux (1) à l'aluminium du constituant aluminium-alcoyle (2) se situe dans la gamme de 1 : 1 à 1 à 1 : 20, caractérisé en ce qu'on utilise un système catalyseur qui contient, en tant que constituant supplémentaire,

(3) une substance phénolique de formule

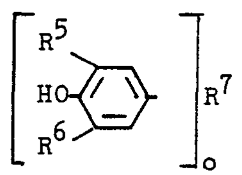 ou (I)

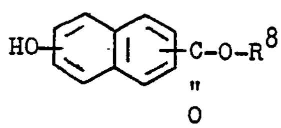 (II)

dans laquelle les symboles ont les significations suivantes :

$R^5$ : Groupe alcoyle en $C_1$ à $C_6$,

$R^6$ : Hydrogène ou groupe alcoyle en $C_1$ à $C_6$,

$R^7$ : Hydrogène ou radical hydrocarboné saturé ne comportant pas plus de 30 atomes de carbone et — le cas échéant — jusqu'à un total de 6 groupes éther et/ou groupes ester,

$R^8$ : Groupe alcoyle en $C_2$ à $C_{24}$ et

o : Nombre entier de 1 à 6, avec cette condition que le rapport molaire du constituant aluminium-alcoyle (2) à la substance phénolique (3) se situe entre 1 : 1 et 40 : 1.